(19) **Europäisches Patentamt**

**European Patent Office**

**Office européen des brevets**

(11) **EP 0 893 595 A2**

(12) **EUROPEAN PATENT APPLICATION**

(43) Date of publication:
27.01.1999 Bulletin 1999/04

(51) Int. Cl.$^6$: **F02D 41/40**

(21) Application number: **98113693.0**

(22) Date of filing: **22.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.07.1997 JP 196180/97**

(71) Applicant:
**TOYOTA JIDOSHA KABUSHIKI KAISHA
Aichi-ken 471-8571 (JP)**

(72) Inventors:
• **Itoh, Yoshiyasu
Toyota-shi, Aichi (JP)**
• **Sugiyama, Tatsumasa
Toyota-shi, Aichi (JP)**
• **Kato, Akira
Kariya-shi, Aichi-ken, 448 (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(54) **A cylinder discrimination system utilizing fuel injection pump and its fuel injection pump**

(57) In order to provide a fuel injection pump capable of discriminating a cylinder, the fuel injection pump (1) capable of supplying fuel to engine (2) having a plurality of cylinders is provided with reference signal generating system (7, 35) capable of generating a plurality of reference signals corresponding to a plurality of cylinders. Of a plurality of reference signals, a specific reference signal differs from the reference signals other than said specific reference signal. The time point at which the specific reference signal is generated is related to a predetermined cylinder out of a plurality of cylinders, whereby the specific cylinder can be identified by means of a single fuel injection pump by discriminating the specific reference signal by discrimination means (71). Therefore, where the difference in fuel injection rate as to a plurality of cylinders is measured during the manufacturing process of the fuel injection pump, it becomes possible to correct the fuel injection rate to reduce the difference in the fuel injection rate by individual cylinders.

F I G. 1

EP 0 893 595 A2

## Description

### INCORPORATION BY REFERENCE

The disclosure of Japanese Patent Application No. HEI 9-196180 filed on June 22, 1997 including the specification, drawings and abstract is incorporated herein by reference in its entirety.

### BACKGROUND OF THE INVENTION

#### 1. FIELD OF THE INVENTION

The present invention relates to a cylinder discrimination system utilizing a fuel injection pump, particularly to one capable of discriminating a cylinder by means of a single fuel injection pump.

#### 2. DESCRIPTION OF THE RELATED ART

Conventionally, cylinder discrimination has been made by means of a specific pulser installed with a camshaft of an engine and a specific sensor for detecting signals from the pulser. Thus, in a conventional method, each cylinder has been identified by means of a signal output from the engine side.

JP-A-6-317211 discloses a conventional fuel injection pump having no cylinder discrimination function. A revolution pulser not only generates a pulse signal each time the drive shaft of the fuel injection pump rotates to a predetermined angle but also generates a signal corresponding to a projectionless portion to serve as reference signal of each cylinder. According to this technique, the reference position of each cylinder can be detected by a signal corresponding to the projectionless portion, but the projectionless portion signals corresponding to the individual cylinders are all alike and thus are not suited for discriminating individual cylinders by the signals output from the fuel injection pump. For this reason, it has been not possible to discriminate individual cylinders by the signals output from a fuel injection pump.

On the other hand, in order to cope with the recent exhaust gas control regulations, it is necessary to improve injection rate accuracy of the fuel injection pump. As one of the methods for improving the injection rate accuracy of a fuel injection pump, it can be considered to measure the difference in the injection rate of the fuel injection pump to a plurality of cylinders during the manufacturing process of the fuel injection pump and to correct the fuel injection rate to each cylinder so that the difference in the fuel injection rate can be reduced. It is preferred for such a correction of the fuel injection rate to each cylinder to be determined before an engine is assembled with a fuel injection pump. In order to do so, it is necessary to discriminate a cylinder by a single fuel injection pump.

Further, on an actual engine, the number of revolutions of the drive shaft of the fuel injection pump is apt to fluctuate while the engine is running at an extremely low speed such as at the time of the start of the engine. Especially, in the case of a diesel engine, the drive shaft of the fuel injection pump is apt to fluctuate largely. Thus, the cylinder discrimination system is required to be capable of accurately discriminating individual cylinders even when the revolution of the drive shaft of the fuel injection pump fluctuates.

### SUMMARY OF THE INVENTION

It is an object of the present invention to provide a system for making possible a cylinder discrimination utilizing a single fuel injection pump and to provide a fuel injection pump capable of discriminating a proper cylinder. Further, the fuel injection pump should be capable of accurately discriminating a proper cylinder even when the revolution of the drive shaft of the fuel injection pump fluctuates.

The above object is achieved by the features of the independent claims. The dependent claims describe further preferred embodiments of the present invention.

The present invention, in order to attain the above object, provides a fuel injection pump having a reference signal generating means capable of generating a plurality of reference signals corresponding to a plurality of cylinders during a single revolution of the drive shaft of the fuel injection pump, the reference signals being designed to define the basis of fuel injection timing and each of the reference signals being differentiated from others, and a discrimination means capable of receiving input of a plurality of reference signals from the fuel injection pump and determining that any one of the received reference signals differs from others to discriminate a specific cylinder.

Thus, according to the present invention, during a single revolution of the drive shaft of the fuel injection pump, a plurality of reference signals corresponding to a plurality of cylinders in an internal combustion engine are generated. Therefore, of a plurality of reference signals, any one specific reference signal differs from each of other reference signals. Thus, it can be made possible to discriminate any one cylinder by a single fuel injection pump by relating the time point at which any one specific reference signal is generated to any one specific cylinder out of a plurality of cylinders. As a result, it can be made possible to reduce the difference in fuel injection rate among a plurality of cylinders by correcting the fuel injection rate based on difference in fuel injection rate among a plurality of cylinders measured during the manufacturing process of the fuel injection pump.

Further, according to the present invention, the fuel injection pump is provided with a unit rotational angle signal generating means capable of generating a unit rotational angle signal with each rotation of the drive shaft of the injection pump by a predetermined crank angle, while a discrimination means is provided with a counting means for counting the number of the unit rotational angle signals, and the number of the unit rotational angle signals to be counted by the counting means during a period from the generation of any one reference signal to the generation of any other specific reference signal can be differentiated from the number of the unit rotational angle signals to be counted by the counting means during a period from the generation of another reference signal to the generation of any other reference signal.

Thus, the number of unit rotational angle signals counted by the counting means during a period from the generation of any one of the reference signals to the generation of any other specific reference signal differs from the number of unit rotational angle signals counted by the counting means during a period from the generation of another reference signal to the generation of any other reference signal. Therefore, a specific reference signal can be detected referring to the difference in the number of the unit rotational angle signals counted during a period from the generation of any one reference signal to the generation of another reference signal. Thus, even when the revolution of the drive shaft of the fuel injection pump fluctuates, any specific reference signal can be detected accurately. Consequently, even when the revolution of the drive shaft of the injection pump fluctuates, any specific cylinder can be identified accurately.

The specification of the present invention does not necessarily covers all the necessary characteristics of the present invention, so that sub-combinations of the groups of the characteristics of the present invention can constitute the present invention.

BRIEF DESCRIPTION OF THE DRAWINGS

Fig. 1 shows a construction of a fuel injection pump, according to one of the embodiments of the present invention and a construction of a diesel engine.
Fig. 2 shows the construction of the fuel injection pump.
Fig. 3 shows an arrangement of a revolution number sensor and a pulser.
Fig. 4a shows a wave form of the engine rotation pulse corresponding to an "ordinary cylinder".
Fig. 4b shows a wave form of the engine rotation pulse corresponding to a "cylinder to be identified".
Fig. 5 shows a flow chart illustrating the procedure of an engine rotation interruption routine.
Fig. 6 is a flow chart illustrating a procedure of a cylinder discrimination routine.
Fig. 7 is a flow chart illustrating a procedure of a modified cylinder discrimination routine.

DESCRIPTION OF THE PREFERRED EMBODIMENT

The embodiments of the present invention will be described with reference to the drawings.

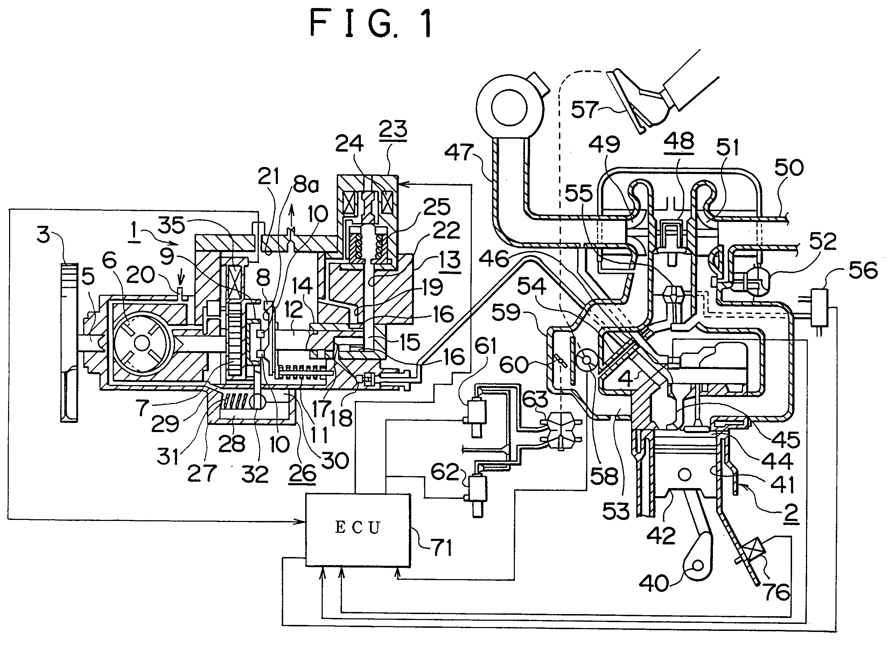

Fig. 1 is a schematic diagram illustrating a construction of a fuel injection pump 1 according to one of the embodiments of the present invention and a construction of a diesel engine 2.

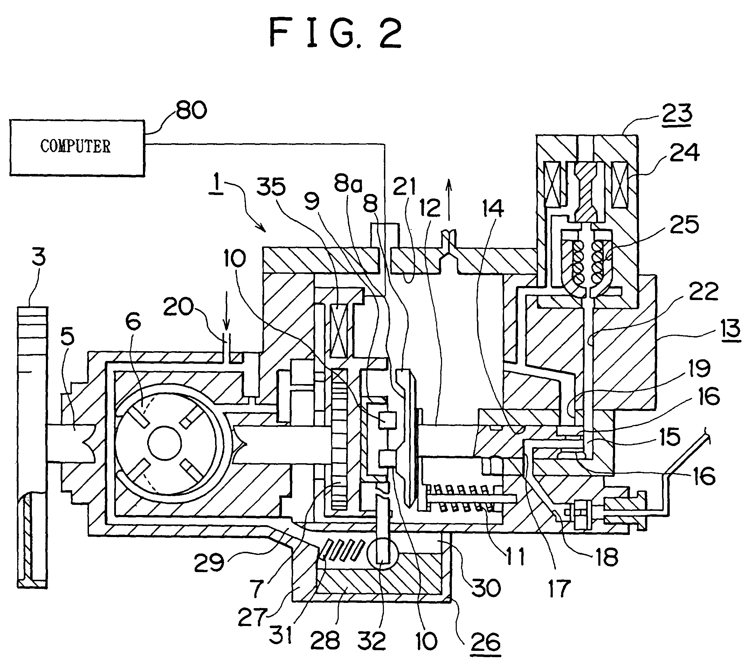

Fig. 2 is an enlarged sectional view of the construction of the fuel injection pump 1.

As shown in Fig. 1, the diesel engine 2 comprises a plurality of cylinders. For this embodiment, the number of cylinders is assumed to be four. Each of the cylinders is provided with a fuel injection nozzle 4 to serve as a fuel injection valve.

The fuel injection pump 1 is provided with a drive pulley 3 linked to a crankshaft 40 by means of a belt and the like. A rotation of the drive pulley causes the fuel injection pump 1 to be driven. As a result, pressurized fuel is supplied to the fuel injection nozzle 4 installed on each cylinder of the diesel engine 2 to effect the injection of the fuel.

Further, the diesel engine 2 is linked to a transmission (not shown), which is provided for transmitting the driving force, and constitutes a driving system together with the crankshaft 40 and others.

In this diesel engine 2, a main combustion chamber 44, corresponding to each cylinder, is constituted of a cylinder bore 41, a piston 42 and a cylinder head 46. Further, a subsidiary chamber 45, communicating with each main combustion chamber 44, is provided corresponding to each cylinder. And, each subsidiary chamber 45 is supplied with the fuel to be injected from the fuel injection nozzle 4.

The diesel engine 2 is provided with an intake passage 47 and exhaust passage 50, respectively. Further, the intake passage 47 is provided with a compressor 49 of a turbo charger 48, which constitutes a supercharger, and the exhaust passage 50 is provided with a turbine 51 of the turbo charger 48. Further, the exhaust passage 50 is provided with a waste gate valve 52 for adjusting boost pressure. As well known, the turbo charger 48 is designed to rotate a turbine 51 utilizing the energy of the exhaust gas, thereby causing the compressor 49, coaxially installed with the turbine 51, to be rotated to increase the pressure of introduced air. As a result, a high-density air-fuel mixture is introduced into the main combustion chamber for burning a large amount of fuel to increase the output of the diesel engine 2.

Further, the diesel engine 2 is provided with an EGR (Exhaust Gas Recirculation) system. The EGR system comprises an EGR passage 54, for recirculating a part of the exhaust gas in the exhaust passage 50 to an intake port 53 of the intake passage 47, and a diaphragm-type EGR valve 55, installed midway on the EGR passage 54. Further, in order for the opening of the EGR valve 55 to be adjusted by adjusting the introduction of negative pressure, an electric vacuum regulating valve (EVRV) 56, whose opening is regulated by duty-controlled electric signal, is provided. With the action of this EVRV 56 the opening of the EGR valve 55 is regulated, whereby the rate of EGR to be introduced into the intake passage 47 from the exhaust passage 50 through the EGR passage 54 is regulated.

Further, a throttle valve 58, designed to be operated in accordance with the degree of depression of an accelerator pedal 57, is provided midway in the intake passage 47. Further, a bypass passage 59 is provided in parallel with the throttle valve 58, the bypass passage 59 being provided with a bypass throttle valve 60. The opening and closing operation of the bypass throttle valve 60 are controlled by means of an actuator 63 having a two-stage type diaphragm chamber, which is driven by controlling two vacuum switching valves (VSV) 61, 62. The opening and closing of the bypass throttle valve 60 are controlled according to various operating conditions. For example, during idling of the engine, the bypass throttle valve 60 is controlled for being half opened in order to reduce noise, vibration and the like of the engine, whereas, during normal operation of the engine, it is controlled to be fully opened, and, when the engine is to be stopped, it is controlled to be fully closed for bringing the engine to a smooth stop. In the fuel injection pump 1, the drive pulley 3 is installed on the front end of the drive shaft 5. A fuel feed pump 6, a kind of vane pump, is provided halfway on the drive shaft 5. In Figs. 1 and 2, the fuel feed pump 6 is shown as a 90 development view. The basal-end portion of the drive shaft 5 is provided with a disk-shaped pulser 7. The basal-end portion of the drive shaft 5 is connected to a cam plate 8 through a coupling (not shown).

A roller ring 9 is provided between the pulser 7 and the cam plate 8. A plurality of cam rollers 10 are mounted along the circumference of the roller ring 9 and opposite to cam faces 8a of the cam plate 8. The cam faces 8a are provided equal in number to the number of the cylinders of the diesel engine 2. The cam plate 8 is always forced to engage with the cam rollers 10 by a spring 11.

The cam plate 8 has the basal end of a plunger 12, for pressurizing the fuel, attached thereto in a manner that the both can rotate together. The cam plate 8 and the plunger 12 are arranged so that they rotate together with the drive shaft 5. That is, the torque of the drive shaft 5 is transmitted to the cam plate 8 through a coupling (not shown), thereby causing the rotating cam plate 8 to engage with the cam roller 10. As a result, the cam plate 8 is made to reciprocate in the left and right directions in Figs. 1 and 2 with a number of times corresponding to the number of the cylinders of the diesel engine 2. The reciprocating motion of the cam plate 8 causes the rotating plunger 12 to reciprocate in the left and right directions in Figs. 1 and 2. Forward movement (lifting motion) of the plunger occurs in a period during which the cam face 8a of the cam plate 8 overrides the cam roller 10 of the roller ring 9, and return movement of the plunger 12 occurs in a period during which the cam face 8a of the cam plate 8 comes down from the cam roller 10.

The plunger 12 is inserted and fit into a cylinder 14 formed with a pump housing 13. A space between the front end surface of the plunger 12 and the bottom surface of the cylinder 14 is defined as a high-pressure chamber 15. The outer periphery of the front end of the plunger 12 is provided with intake grooves 16, equal in number to the number of cylinders of the diesel engine 2, and a distribution port 17. The pump housing 13 is provided with a distribution passage 18 and an intake port 19 corresponding to the intake grooves 16 and the distribution port 17, respectively.

A rotation of the drive shaft 5 causes the fuel feed pump 6 to be driven. As a result, the fuel is supplied from the fuel pump (not shown) to a combustion chamber 21 through a fuel supply port 20. Return movement of the plunger 12 causes the pressure of the high-pressure chamber 15 to be reduced. During the intake stroke, through which the pressure of the high-pressure chamber is reduced, one of the intake grooves 16 is made to communicate with the intake port 19, whereby the fuel is introduced from the fuel camber 21 into the high-pressure chamber 15. On the other hand, forward movement of the plunger 12 causes the pressure of the high-pressure chamber 15 to rise. During the compression stroke, through which the pressure of the high-pressure chamber 15 rises, pressurized fuel is supplied through the distribution passage 18 to the fuel injection nozzle 4 of each cylinder to effect fuel injection.

The pump housing 13 is provided with a spill passage 22, which communicates with both the high-pressure chamber 15 and the fuel chamber 21 and which is designed to allow the spill of the fuel. An electromagnetic spill valve 23, as an actuator for regulating the spill of the fuel from the high-pressure chamber 15, is provided halfway on the spill passage 22. The electromagnetic spill valve is of open type. When a coil 24 is not charged with electric current (off-state), a valve body 25 is open. As a result, the fuel in the high-pressure chamber 15 is spilled into the fuel chamber 21. When the coil 24 is charged with electric current (on-state), the valve body 25 is closed. As a result, the spill of fuel into the fuel chamber 21 from the high-pressure chamber is discontinued.

Thus, by controlling the duration during which the electromagnetic spill valve 23 is charged with electric current, the opening and closing operation of the electromagnetic spill valve 23 is regulated. The pressure of the fuel in the high-pressure chamber 15 can be reduced by opening the electromagnetic spill valve 23 during the compression stroke of the plunger 12. Thus, while the fuel injection from the fuel injection nozzle 4 is discontinued, even when the plunger 12 starts its forward movement, the pressure of the fuel in the high-pressure chamber 15 will not rise as long as the electromagnetic spill valve 23 is kept open, and the fuel will not be injected from the fuel injection nozzle 4. The timing for finishing the injection from the injection nozzle 4 can be regulated by controlling the timing for opening and closing the electromagnetic spill valve 23, thereby controlling the fuel injection rate.

Further, a timer system 26 (shown as 90° development view in Fig. 2) for controlling the fuel injection timing is provided under the pump housing 13. This timer system 26 is provided for changing the timing for the cam face 8a to engage with the cam roller 10 by changing the position of the roller ring 9 with respect to the direction of rotation of the drive shaft 5, that is, the timing for the cam plate 8 and the plunger 12 to change the timing for forward movement and return movement respectively.

The timer system 26 is driven by controlling hydraulic pressure and comprises a timer housing 27, a timer piston 28 fit in the housing 27, a timer spring 31 for forcing the timer piston 28 towards a pressurizing chamber 30 on the opposite side from a low-pressure side 29 in the housing 27, and the like. The timer piston 28 is connected to the roller ring 9 through a slide pin 32. Description of the operation of the timer system 26 is omitted here.

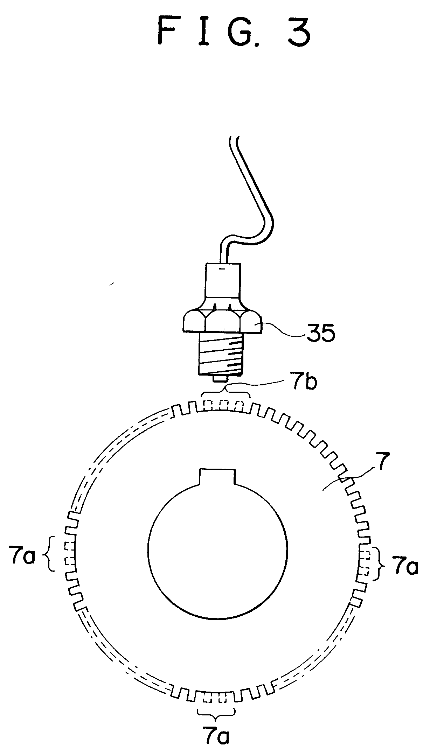

Fig. 3 shows a revolution number sensor 35 and the pulser 7 arranged in the fuel injection pump shown in Fig. 1. The revolution number sensor 35 is disposed facing the outer periphery of the pulser 7. The revolution number sensor 35, for example, may be a known electromagnetic pickup coil. The revolution number sensor 35 outputs a detection signal each time the projection formed on the outer periphery of the pulser 7 passes it. The detection signal output from the revolution number sensor 35 undergoes a waveform shaping to obtain an engine rotation pulse.

As shown in Fig. 3, the pulser 7 comprises 64 projections arranged at equal intervals including projectionless portions 7a (or projectionless portion 7b) arranged at each 90° (180° CA in terms of crank angle). The projectionless portions 7a comprise three projectionless portions, each lacking two projections, while the projectionless portion 7b lacks three projections.

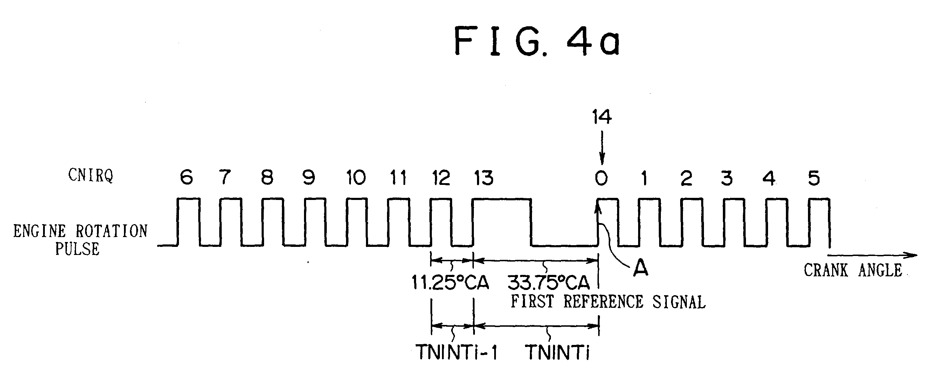

Fig. 4a shows the waveform of the engine rotation pulse corresponding to an "ordinary cylinder." Here, the term "ordinary cylinder" means those cylinders other than the cylinder to be identified of the diesel engine 2. In Fig. 4a, CNIRQ denotes a pulse counter (initialized at 0) for indicating the number of engine rotation pulses following the output of the reference signal. The pulse counter is measured by ECU 71. The pulse counter, may, for example, comprise a logic circuit for updating the value of the counter with an increment synchronized with the rising edge of the engine rotation pulse. With the rotation of the crankshaft 40 of the diesel engine 2, the engine rotation pulse of $720°$ CA/64 = $11.25°$ CA by each projection is output for a 0-12th (CNIRQ = 0-12) engine rotation pulse, respectively. The engine rotation pulse (1st reference signal) of $11.25°$ CA x $33.75°$ CA is output for the 13th (CNIRQ = 13) engine rotation pulse by projectionless portion 7a. The first reference signal is used for determining the basis of the fuel injection timing in the "ordinary cylinder."

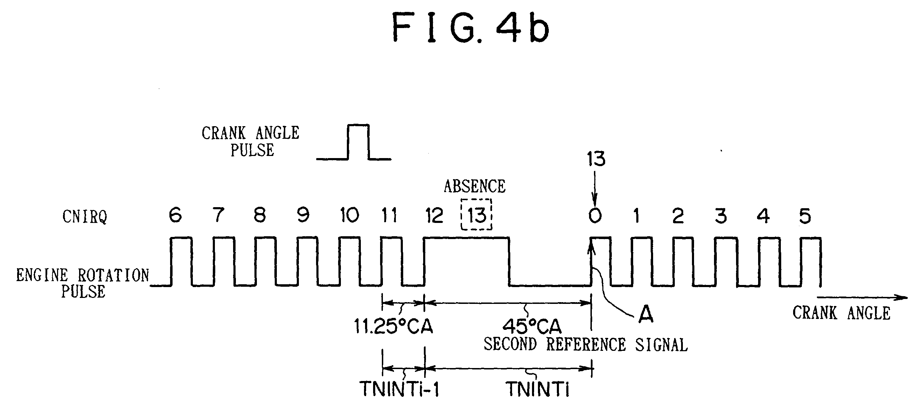

Fig. 4b shows the waveform of the engine rotation pulse corresponding to a "cylinder to be identified." Here, the term "cylinder to be identified" means a specific single cylinder out of the plurality of cylinders of the diesel engine 2. In Fig. 4b, CNIRQ denotes a pulse counter (initialized at 0) for indicating the number of engine rotation pulses following the output of the reference signal. The rotation of the crankshaft 40 of the diesel engine 2 causes the engine rotation pulse of $720°$ CA/64 = $11.25°$ CA by each projection to be output for each of 0-11th (CNIRQ = 0-11) engine rotation pulse. For the 12th (CNIRQ = 12) engine rotation pulse, the engine rotation pulse (a second reference signal) of $11.25°$ CA x 4 = $45°$ CA by projectionless portion 7b is output. The second reference signal is used for determining the basis of fuel injection timing for the "cylinder to be identified." In this way, the second reference signal corresponding to the "cylinder to be identified" differs from the first reference signal corresponding to the "ordinary cylinder."

During a single rotation of the drive shaft 5 of the fuel injection pump 1, reference signals (3 first reference signals and 1 second reference signal), equal in number to corresponding to four cylinders, are generated.

In the following, a procedure for discriminating a single specific cylinder out of a plurality of cylinders constituting the diesel engine 2 (hereinafter referred to as cylinder discrimination routine) will be described. The cylinder discrimination routine is executed in an engine rotation pulse interruption routine (hereinafter referred to as NE interruption routine). The NE interruption routine is synchronized with the rising edge of the engine rotation pulse and executed by ECU 71.

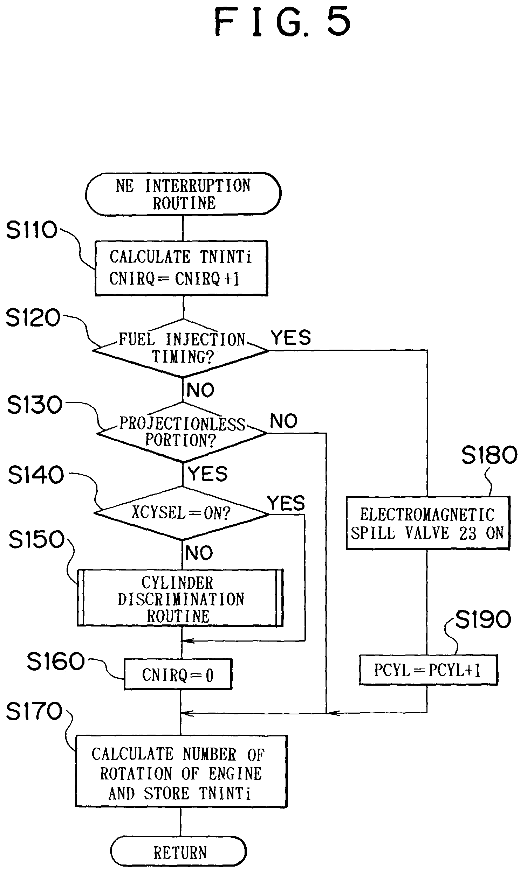

Fig. 5 shows the procedure of the NE interruption routine. In the following, the NE interruption routine will be described step by step, referring to an example of the NE interruption routine to be executed by being synchronized with the rising edge, indicated by arrow A, of the engine rotation pulse shown in Figs. 4a and 4b.

In step S110, the interval $TNINT_i$ of the engine rotation pulse is calculated. For example, this interval is calculated by counting the interval from a rising edge of the engine rotation pulse to the next rising edge by a timer (not shown) built in the ECU 17. Further, the count of the pulse counter CNIRQ is increased by 1.

In step S120, the fuel injection timing is determined. For example, when the count of the pulse counter CNIRQ is equal to the number of pulses CANGL at spill time, the time point is regarded as the fuel injection timing, and the processing proceeds to step S180. In other cases, the processing proceeds to step S130. The number of pulses CANGL at spill time, for example, is "8."

In step S130, it is determined whether or not the engine rotation pulse corresponds to the projectionless portion 7a or 7b. For example, when the following numerical formula (1) holds, it can be determined that the engine rotation pulse corresponds to the projectionless portion 7a or 7b, and the processing proceeds to step S140. In other cases, the processing proceeds to step S170.

$$TNINT_i > TNINT_{i-1} \times 2.2 \qquad (1)$$

In this case, $TNINT_{i-1}$ is calculated where the NE interruption routine is executed at an immediately preceding rising edge, and indicates an interval of the stored engine rotation pulse.

In step S140, it is determined whether a cylinder discrimination completion flag XCYSEL is ON or not. When the cylinder discrimination completion flag XCYSEL is ON, this indicates that the cylinder discrimination is finished. Thus, when the cylinder discrimination completion flag is ON, the cylinder discrimination routine (step S150) is skipped. When the cylinder discrimination completion flag XCYSEL is OFF, the cylinder discrimination routine (step S150) is called.

Further, the cylinder discrimination completion flag XCYEL is initialized to be set OFF before the NE interruption routine is executed for the first time. As described later, it is possible that the cylinder discrimination completion flag is set for ON in the cylinder discrimination routine (step S150).

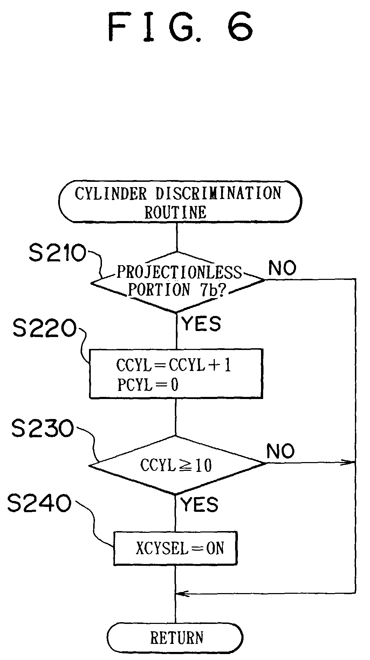

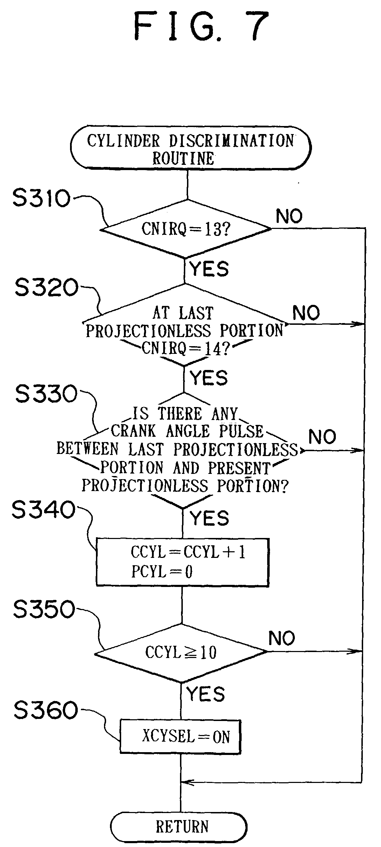

In step S150, the cylinder discrimination routine is executed. The procedure of the cylinder discrimination routine will be described later referring to Figs. 6 and 7.

In step S160, pulse counter CNIRQ is initialized for 0.

In step S170, the number of rotation of the engine is calculated, and, further, the engine rotation pulse interval $TNINT_i$ calculated in step S110 is stored. The stored engine rotation pulse interval $TNINT_i$ is referred to when the NE interruption routine is executed again.

In step S180, the electromagnetic spill valve 23 is turned on at a predetermined timing, thereby completing the fuel injection from the fuel injection nozzle 4. The predetermined timing for this action is calculated by the ECU 71.

In step S190, the value of a cylinder number pointer PCYL is increased by 1. The cylinder number pointer PCYL is used for discriminating the cylinders.

Fig. 6 shows the procedure of the cylinder discrimination routine.

In step S210, it is determined whether or not an engine rotation pulse corresponds to the projectionless portion 7b. When the numerical formula (2) given below holds, the engine rotation pulse is determined to be corresponding to the projectionless portion 7b, and the processing proceeds to step S220. In other cases, the processing returns to the NE interruption routine.

$$TNINT_i > TNINT_{i-1} \times 3.0 \qquad (2)$$

In step S220, the count of the cylinder discrimination counter CCYL is increased by 1. Further, the cylinder number pointer PCYL is set to 0. Further, the cylinder discrimination counter CCYL is set to 0 before the NE interruption routine is executed for the first time.

In step S230, it is determined whether or not the count of the cylinder discrimination counter CCYL is 10 or more.

When the count of the cylinder discrimination counter CCYL is 10 or more, this means that an accurate cylinder discrimination has already been made 10 times. Therefore, when the condition is determined to be "Yes" in step S230, the cylinder discrimination completion flag XCYSEL set to ON (step S240).

As described in the foregoing, in the case of the cylinder discrimination routine illustrated in Fig. 6, whether an engine rotation pulse corresponds to the projectionless portion 7b or not is determined based on the engine rotation pulse interval. Such a method of determination, however, is apt to be affected by the fluctuation of the rotation of the engine 2, because the engine rotation pulse interval fluctuates with the fluctuation of the rotation of the engine 2. An event that one of the engine rotation pulses corresponding to one projection is skipped can occur due to a disturbance such as the fluctuation of the rotation of the engine 2, especially when the engine 2 is operating at an extremely low speed such as that at the time of the start of its operation. In such a case, it is possible that the projectionless portion 7a is mistaken for the projectionless portion 7b. This means that there is the possibility that an "ordinary cylinder" is mistaken for an "cylinder to be identified."

Fig. 7 shows a procedure of a cylinder discrimination routine which has been improved for preventing such erroneous determination.

In step S310, whether or not the count of the pulse counter CNIRQ is "13". When the count of the pulse counter CNIRQ is "13", this means that the detected projectionless portion is the projectionless portion 7b (Refer to Fig. 4b). When the count of the pulse counter CNIRQ is "13", the processing proceeds to step S320. In other cases, the processing returns to the NE interruption routine.

In step S320, when it is determined whether or not the count of the pulse counter CNIRQ was "14" at the time of the last count with the projectionless portion, the count of the pulse counter CNIRQ is stored, for example, in a RAM (not shown) of the ECU 17. When the count of the pulse counter CNIRQ detected at last count with a projectionless portion was "14", this means that the projectionless portion which was detected last time was the projectionless portion 7a (Refer to Fig. 4a). When the count of the pulse counter CNIRQ at the time of the last count with the projectionless portion was "14", the processing proceeds to step S330. In other cases, the processing returns to the NE interruption routine.

In step S330, it is determined whether or not a crank angle pulse has been detected between the last count with a projectionless portion and the present count with a projectionless portion. The crank angle pulse is generated each time the crankshaft 40 rotates once. The crank angle pulse can be detected by the crank angle sensor 76 shown in Fig. 1. One rotation of the drive shaft 5 of the fuel injection pump 2 corresponds to two rotations of the crankshaft 40. If any crank angle pulse has been detected, the processing proceeds to step 340. In other cases, the processing returns to the NE interruption routine.

Proceedings in steps S340 through S360 are identical with those in steps S220 through S240, and so the descriptions thereof are omitted here.

As described in the foregoing, in the cylinder discrimination routine illustrated in Fig. 7, it is determined that a correct discrimination of cylinder is made only when all the determinations made in steps S310, S320 and S330 are "Yes." Effect of the fluctuation of the rotation of the engine 2 can be reduced by discriminating the cylinder based on the number of the engine rotation pulse instead of the engine rotation pulse interval. Further, the accuracy of the cylinder discrimination can be improved further by using the presence or absence of the crank angle pulse as a cylinder discrimination condition.

According to the cylinder discrimination routine given in Figs. 6 and 7, a cylinder can be identified by means of a single fuel injection pump, without requiring the use of any special sensor. Since any cylinder can be identified only by means of a single fuel injection pump, it can also be made possible to determine whether or not there has been any misfire at the time of on-board diagnosis (OBD) and to discriminate any cylinder having abnormal nozzle and the like.

Instead of the determination in step S330 illustrated in Fig. 7, it is also possible to discriminate any cylinder more accurately by determining that any crank angle pulse has not been generated at the time of the last count with a projectionless portion but a crank angle pulse is generated at the time of the present count with the projectionless portion.

Further, it is possible to discriminate a cylinder more accurately by determining whether or not the presently identified cylinder is the fourth cylinder from the cylinder identified last time.

The timing of the cylinder discrimination is not limited to the time at which the engine 2 is started. For example, a cylinder may be identified while the engine 2 is operating in a stable condition such as idling. Thus, it is useful to re-confirm cylinder discrimination in order to maintain the accuracy of cylinder discrimination.

According to the present embodiment, ECU 71 for controlling the operation of the diesel engine 2 is utilized (together with a fuel injection pump) for discrimination of cylinder. However, a cylinder may also be identified by connecting a computer 80 as illustrated in Fig. 2 as another method for discriminating cylinder by utilizing a single fuel injection pump.

The embodiment is not intended to define the scope of the present invention set out in the claims, and all the combinations of characteristics of the present invention are not necessarily essential for the solution of the problems cited in relation with the present invention. In order to provide a fuel injection pump capable of discriminating a cylinder, the fuel injection pump 1 capable of supplying fuel to engine 2 having a plurality of cylinders is provided with reference signal generating system 7, 35 capable of generating a plurality of reference signals corresponding to a plurality of cylinders. Of a plurality of reference signals, a specific reference signal differs from the reference signals other than said specific reference signal. The time point at which the specific reference signal is generated is related to a predetermined cylinder out of a plurality of cylinders,

## Claims

1.  A cylinder discrimination system of an engine having a plurality of cylinders, the system comprising a reference signal generating means (7, 35) provided at a fuel injection pump (1) and capable of generating a plurality of reference signals corresponding to the plurality of cylinders during rotation of a drive shaft (5) of the fuel injection pump (1), wherein the generated reference signals are used for determining a basis of a fuel injection timing and wherein any specific one of the plurality of reference signals differs from those reference signals other than the specific reference signal, and a discrimination means (71; 80) capable of determining the specific reference signal from the other reference signals to discriminate a specific cylinder.

2.  A cylinder discrimination system according to claim 1, wherein the reference signal generating means (7, 35) consists of a unit rotational angle signal generating means incorporated in the fuel injection pump (1) and capable of generating a unit rotational angle signal for each rotation of the drive shaft (5) by a predetermined angle, wherein the discrimination means (71; 80) is provided with a counting means (71) for counting the number of unit rotational angle signals; and wherein the number of unit rotational angle signals counted by the counting means (71) in an angle range of a predetermined extent including a position corresponding to the specific reference signal differs from the number of unit rotational angle signals counted in an angle range of the same predetermined extent excluding a position corresponding to the specific reference signal.

3.  A cylinder discrimination system according to claim 2, wherein additionally the presence or absence of a crank angle signal from a crank angle sensor (76) is taken as a cylinder discrimination condition.

4. An injection system of an engine having a plurality of cylinders comprising a cylinder discrimination system according to claim 1 to 3 for bringing alternating operation conditions of the injection system into time correspondence with the plurality of cylinders.

5. A fuel injection pump (1) designed for supplying fuel to an internal combustion engine (2) having a plurality of cylinders, comprising a reference signal generating means (7, 35) for generating a plurality of reference signals, wherein a specific reference signal out of the plurality of reference signals differs from those reference signals other than the specific reference signal.

6. A fuel injection pump according to claim 5, wherein the reference signal generating means (7, 35) is provided on a drive shaft (5) of the fuel injection pump (1), and portions (7a, 7b) corresponding to reference position of each cylinder are detected by a detection means (35) while the drive shaft (5) rotates.

7. A fuel injection pump according to claim 6, wherein the specific reference signal is generated when the portion (7b) corresponding to the reference position of a specific cylinder is detected by the detection means (35) which specific reference signal differs in the duration from other reference signals.

# F I G. 1

# FIG. 2

# F I G. 3

35

7b

7

7a

7a

7a

# F I G. 4a

CNIRQ  6  7  8  9  10  11  12  13  14  0  1  2  3  4  5

ENGINE ROTATION PULSE

11.25°CA  33.75°CA

FIRST REFERENCE SIGNAL

TNINTi-1  TNINTi

CRANK ANGLE

A

EP 0 893 595 A2

# FIG. 4b

CRANK ANGLE
PULSE

ABSENCE

13

CNIRQ    6   7   8   9   10   11   12   [13]    0   1   2   3   4   5

ENGINE ROTATION
PULSE

A

CRANK ANGLE

11.25°CA     45°CA
SECOND REFERENCE SIGNAL

TNINTi-1     TNINTi

EP 0 893 595 A2

# FIG. 5

NE INTERRUPTION
ROUTINE

S110 — CALCULATE TNINTi
CNIRQ = CNIRQ +1

S120 — FUEL INJECTION
TIMING? — YES

NO

S130 — PROJECTIONLESS
PORTION? — NO

YES

S140 — XCYSEL = ON? — YES

NO

S150 — CYLINDER
DISCRIMINATION
ROUTINE

S180 — ELECTROMAGNETIC
SPILL VALVE 23 ON

S190 — PCYL = PCYL +1

S160 — CNIRQ = 0

S170 — CALCULATE NUMBER OF
ROTATION OF ENGINE
AND STORE TNINTi

RETURN

# F I G. 6

CYLINDER DISCRIMINATION ROUTINE

S210 — PROJECTIONLESS PORTION 7b? — NO

YES

S220 — CCYL = CCYL + 1
PCYL = 0

S230 — CCYL ≥ 10 — NO

YES

S240 — XCYSEL = ON

RETURN

# FIG. 7

CYLINDER DISCRIMINATION ROUTINE

S310 — CNIRQ=13? — NO

YES

S320 — AT LAST PROJECTIONLESS PORTION CNIRQ=14? — NO

YES

S330 — IS THERE ANY CRANK ANGLE PULSE BETWEEN LAST PROJECTIONLESS PORTION AND PRESENT PROJECTIONLESS PORTION? — NO

YES

S340 — CCYL=CCYL+1 PCYL=0

S350 — CCYL≧10 — NO

YES

S360 — XCYSEL=ON

RETURN